# EUROPEAN PATENT SPECIFICATION

(11) **EP 3 992 489 B1**
(45) Date of publication and mention of the grant of the patent: **05.06.2024**
(21) Application number: 20205148.8
(22) Date of filing: 02.11.2020
(51) Int. Cl.: F16D 66/02, F16D 65/00, F16D 55/22

(54) **BRAKE CALIPER, WEAR INDICATOR AND VEHICLE BRAKE**
BREMSSATTEL, VERSCHLEISSANZEIGER UND FAHRZEUGBREMSE
ÉTRIER DE FREIN, INDICATEUR D'USURE ET FREIN DE VÉHICULE

(43) Date of publication of application: 04.05.2022
(73) Proprietor: ZF CV Systems Europe BV, 1170 Brussels (BE)
(72) Inventor: STRZALA, Wieslaw, 46-220 Byczyna (PL)
(74) Representative: Rabe, Dirk-Heinrich

(56) References cited:
- EP-A2- 0 411 284
- DE-A1- 3 230 266
- US-A- 3 675 197
- US-A- 4 832 160

## Description

The invention relates to a brake caliper for a vehicle brake, in particular for a disc brake of a commercial vehicle, the brake caliper comprising:
- a brake pad having a friction lining and a brake pad carrier configured to carry the friction lining proximate to a brake disc of the vehicle brake,
   wherein the friction lining has a contact surface facing away from the brake pad carrier which is configured to bear against the brake disc of the vehicle brake during braking, and
- a wear indication device having a fixation means and a signal wire, wherein the fixation means is configured to engage the brake pad carrier, such that the wear indication device projects from the brake pad carrier towards the contact surface.

Brake calipers of the aforementioned type are generally known in the art and typically employed in trucks or buses. The friction lining of such a brake caliper is configured to bear against a brake disc during braking, which in turn causes the friction lining to wear over time. To monitor the friction lining thickness, in particular to determine whether the thickness of the friction lining is below a predefined wear limit, it is known in the art to arrange a wear indication device proximate to the friction lining.

As the wear, i.e. consumption, of the friction lining caused by the rotation of the brake disc during the brake progresses, at some point a distal portion of the wear indication device will commence to be worn off, i.e. consumed, as well.

Due to that the distal portion of the wear indication device facing towards the friction lining and/or the brake disc is formed by a material that does not damage the brake disc but withstands high temperatures that occur during braking.

A signal wire is typically integrated in the distal portion of the wear indication device that is subject to wear. Once the wire is being ruptured by the rotation of the brake disc during braking, a voltage change is registered as a function of the rupture, indicating that the wear limit is reached. Only a residual amount of friction lining remains such that the vehicle can safely be taken to a maintenance station for brake pad replacement.

The wear indication device is typically coupled to the brake pad carrier by a plug connection, i.e. by inserting a plug of the wear indication device into a corresponding recess in the brake pad carrier.

EP 02297478 B1 and DE 10201048988 A1 show wear indication devices of the aforementioned type that allow an appropriate wear indication and mounting of the wear indication device to the brake pad carrier.

In US3675197 A1, the fixing of the holding means in the form of a clip is based on friction. The clip has two spring-like legs which are prestressed. After attaching the clip to the brake carrier, the clip is held only by the clamping forces of the legs. As soon as the distances between the legs are too large or the brake carrier is too narrow with respect to the axial alignment to the brake disk, the brake lining wear indicator drops from the brake carrier or at least does not remain in the starting position or slips unintentionally.

In EP0411284 A3, the positioning is realized by means of a "press fit" connection. If the tolerances between the outside diameter of the holding means and the through hole of the brake carrier are not exactly correct, the brake lining wear indicator can fall out in the event of a rough travel.

If the tolerances between the trough hole and the holding means are not correct in the DE3230266 A1, then it does not protect against a twisting of the holding means or even against a twisting of the cable

US4832160 A1 is the closest state of the art and shows an indicator with a body. The body 1 consists of an elongated body with a molded cable, the body having some fasteners in the form of studs and lugs. The stud is arranged in a hole of the brake caliper and fix the indicator on the brake caliper.

However, there is still room for improvement. In particular, it was found out that no voltage signal will be registered, when the head portion of the wear indication device breaks prematurely since the wire will not be ruptured by the brake disc. Furthermore, since the head portion of the wear indication device will be worn off each time the wear limit is reached, the whole wear indicator has to be replaced.

It was therefore an object of the present invention to provide a brake caliper that overcomes the above-mentioned issue. In particular, it was an object of the invention to simplify the mounting of the wear indication device to the brake pad carrier.

### Beschreibung Seiten 3 bis 5 (Reinschrift)

In accordance with the present invention, the signal wire is at least partly arranged externally on the wear indication device (200) and projects therefrom towards the contact surface. The invention advantageously recognizes that by having the signal wire projecting towards the contact surface, the signal wire will meet the disc brake of a vehicle brake due to the consumption of the friction lining prior to the fixation means. Additionally, the fixation mean is protected from any damage due to the brake disc and therefore provides a reliable fixation of the signal wire. Furthermore, only the ruptured signal wire has to be replaced upon indication of the wear limit instead of the whole wear indication device. Thus, a fail-safe monitoring and indication of the consumption of the friction lining is provided and the wear of the fixation means is limited.

In a second aspect, that is both a preferred embodiment of the first aspect and a separate inventive aspect, the invention also relates to a brake caliper of the aforementioned type. The invention suggests in the second aspect that the brake pad carrier has a carrier plane facing towards the friction lining and a rear plane opposite to the carrier plane, and wherein the fixation means is configured to engage the carrier plane and the rear plane such as to clamp the wear indication device to the brake pad carrier. Thus, the mounting of the wear indication device to the brake pad carrier is simplified by having a fixation means that allows to couple the wear indication device to the brake pad carrier by a simple clamping mechanism. Further, an additional recess or bore weakening the brake pad carrier is not required to couple the wear indication device to the brake pad carrier in a positive fit.

It will be understood that the carrier plane and the rear plane are not limited to flat surfaces without elevations and depressions. Instead, the carrier plane and the rear plane each define at least a part that provides a suitable surface for the fixation means to apply a clamping force.

According to the invention, the fixation means has a front part engaging the carrier plane, a back part engaging the rear plane and a bridge connecting the front part and the back part, wherein preferably, the bridge is
configured to rest against an upper surface of the brake pad carrier. Thereby the fixation means can be coupled to the brake pad carrier by pushing the fixation means from the upper surface of the brake pad carrier along the carrier plane and the rear plane into its final position.

Thus, the final position of the fixation means with respect to the carrier plane is advantageously secured by the bridge which rests against an upper surface of the brake pad carrier.

Preferably, the fixation means comprises a bar extending from the front part parallel to the carrier plane and wherein the bar is configured to engage the signal wire proximate to the carrier plane. Thus, the signal wire is repeatable secured at a position where it is proximate to the carrier plane and the contact surface such that the signal wire will meet the brake disc and will be ruptured when the predefined wear limit is reached.

Preferably, the bar extends at a distance and parallel to the carrier plane. The bar preferably is straight, but may also be partially or completely curved.

Further preferred, the signal wire is at least partially looped around the bar such that a looped portion of the signal wire projects from the bar towards the contact surface. Such a (partial) loop is simple to make, thus providing an efficient mounting interface.

Preferably, the bar extends parallel to the carrier plane and at least partly into the loop such that the loop projects from the carrier or the bar respectively toward the contact surface.

According to the invention, the brake pad carrier has a recess, preferably a through-hole, extending from the carrier plane to the rear plane, wherein the signal wire is led through the recess. Thus, a secure and reliable feeding of the signal wire to its final position is provided.

According to another preferred embodiment, the fixation means, preferably the bar, is configured to releasably engage the signal wire, preferably the looped portion, proximate to the carrier plane. Thus, by providing a removable engagement of the fixation means and the signal wire, the fixation means can be used several times upon replacement of a ruptured signal wire. Preferably, the signal wire is engaged by the fixation means in front of the through-hole.

According to another aspect of the invention, the fixation means has a recess configured to guide the signal wire, wherein the recess at least partly overlaps the recess of the brake pad carrier and a back end portion of the signal wire is led through both recesses. Thus, the signal wire and in particular its back end can be guided from the rear plane to a connector which can be used to connect the wear indication device to the control unit of a vehicle.

According to another aspect of the invention, the fixation means has a positioning means configured to engage a circumferential surface of the trough-hole thereby arranging the fixation means at a predefined position with respect to the through-hole. Thus, the fixation means is secured parallel to the carrier plane by the positioning means and additionally orthogonal to the carrier plane by the clamping force acting on the carrier plane and the rear plane respectively. Such a positioning means securely arranges the fixation means with respect to the through-hole and at the same time provides a repeatable positioning of the signal wire which ensures a safe detection of the wear limit.

In a third aspect, the invention also relates to a wear indication device

The embodiments and benefits of the brake caliper, according to the first aspect, are at the same time preferred embodiments and benefits of the wear indicator according to the third aspect for such a brake caliper and vice versa. To avoid unnecessary respective reference is thus made to the description hereinabove.

In a fourth aspect, the invention also relates to a vehicle brake.

The embodiments and benefits of the brake caliper, according to the first aspect, are at the same time preferred embodiments and benefits of the vehicle brake according to the fourth aspect having such a brake caliper and vice versa. To avoid unnecessary respective reference is thus made to the description hereinabove.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality.

These and other aspects, features and/or technical effects will be apparent from and elucidated with reference to the illustrations described hereinafter, which show in:
- Fig. 1:: a disc brake according to the prior art;
- Fig. 2:: a part of a brake caliper according to a preferred embodiment in a perspective view in a condition before the wear limit is reached;
- Fig. 3:: a part of the brake caliper according to Fig. 2 in a condition after the wear limit is reached;
- Fig. 4:: the rear side of a brake pad in a perspective view;
- Fig. 5:: the brake pad of Fig. 4 in a first sectional view;
- Fig. 6:: the brake pad of Fig. 4 in a second sectional view;
- Fig. 7:: a fixation means to a preferred embodiment in a perspective view.

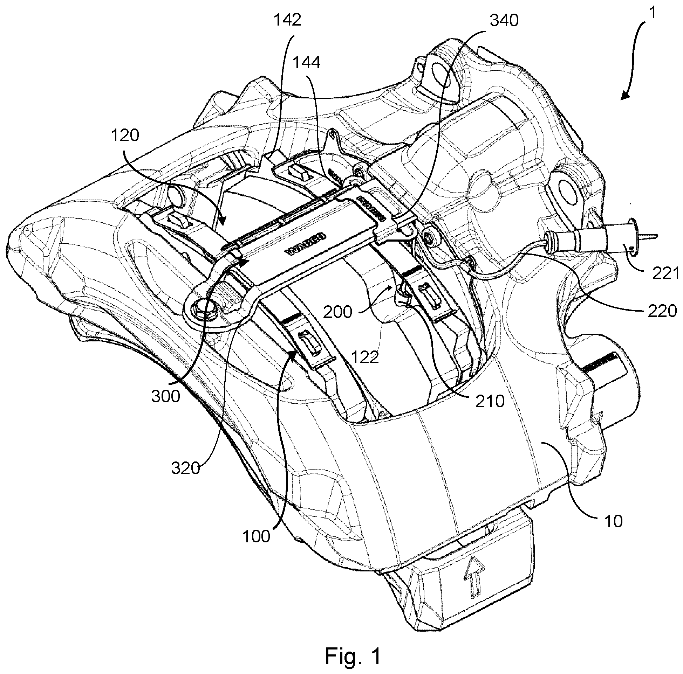

Fig. 1 shows a commercial disc brake 1 known in the art that comprises a brake caliper 10, forming an accommodation space for, among others, brake pads 100. Each brake pad 100 comprises a brake pad carrier 140, each having and a friction lining 120 that comes into contact with the disc of the brake (not shown) during braking in order to apply a braking force.

The brake pad carrier 140 extends completely over the inner surface of the brake caliper 10 and projects beyond the upper periphery of the brake caliper 10. In the projecting region are one or more attachment counterparts provided.

Each of the brake pad carriers 140 has a carrier plane 142, which is configured to carry one of the friction linings 120.

Further, the brake pad carrier 140 has a wear indication device 200 which is configured to assess the degree of wear of the friction lining 120. The wear indication device 200 is coupled to the brake pad carrier 140 and at least partly received in a recess (not shown) of the friction lining 120.

Each of the frictions linings 120 has a cutout 122 surrounding the recess (not shown) such that the recess is arranged within the region of the cutout 122. Thus, the wear indication device 200 is surrounded by the frictions lining 120 wherein the cutout 122 allows an easy access to the wear indication device 200 without requiring demounting of the brake pads 100.

The two brake pad carriers 140 each carrying one of the friction linings 120 are held in position by a spring hanger 300.

The spring hanger 300 is preferably connected to the brake caliper 10 by a spring hanger seat 340 on one side and by a spring hanger fixation means 320 Beschreibung Seite 9 (Reinschrift)

on the other side. After releasing the spring hanger fixation means 320 and guiding the spring hanger 300 out of its seat 340, the spring hanger 300 may be removed. When the spring hanger 300 is removed, the brake pads 100 may be removed likewise and be exchanged.

The wear indication device 200 has a fixation means 210 and a signal wire 220 comprising a connector 221 at its distal end.

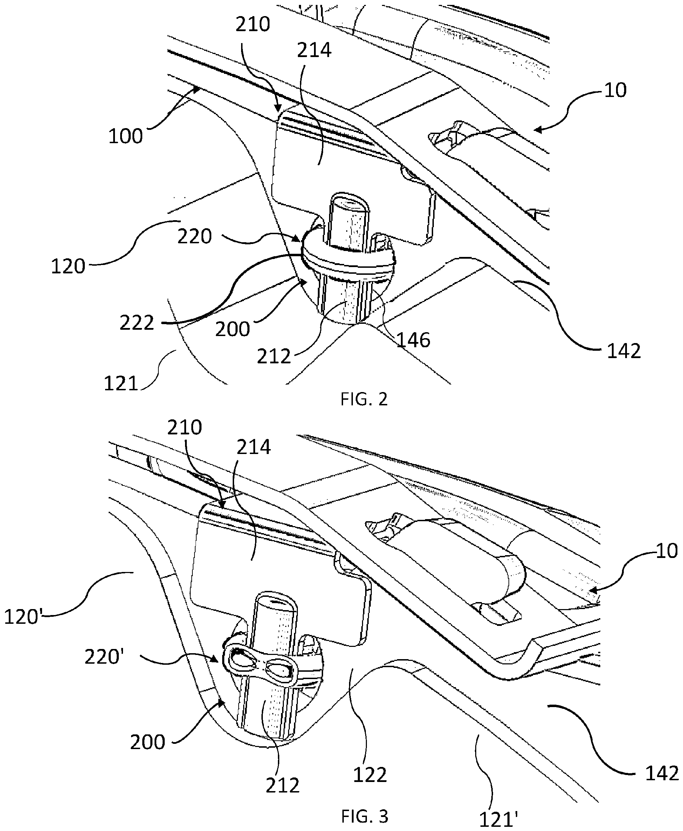

Figs. 2 and 3 show a sectional view of the brake caliper 10 according to a first preferred embodiment of the invention. The brake caliper 10 comprises a brake pad 100 having a friction lining 120, 120' and a brake pad carrier 140 configured to carry the friction lining 120, 120'.

The brake caliper 10 further has a wear indication device 200 having a fixation means 210 and a signal wire 220, 220', wherein the signal wire 220, 220' is coupled to the brake pad carrier 140 by the fixation means 210.

In Fig. 2 the signal wire 220 of the wear indication device 200 is in a non-ruptured condition. In contrast, Fig. 3 illustrates the same embodiment of the present invention with the signal wire 220' of the wear indication device 200 in a ruptured condition indicating that a wear limit is reached.

The friction lining 120, 120' has a cutout 122 surrounding the wear indication device 200. The friction lining 120, 120' further has a contact surface 121 facing away from the brake pad carrier 140 which is configured to bear against a brake disk of a vehicle brake (see Fig. 1) during braking.

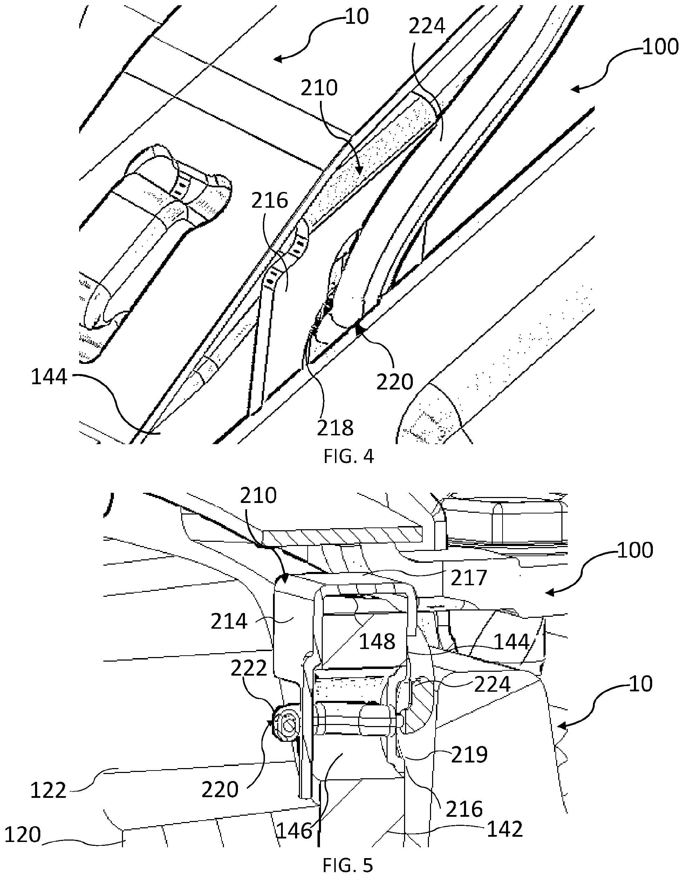

The brake pad carrier 140 has a carrier plane 142 and the friction lining 120, 120' is attached to said carrier plane 142. The brake pad carrier 140 has a recess 146 (see also Fig. 5), wherein the signal wire 220, 220' is extending at least partly through the recess 146. According to the invention shown in Figs. 2 to 7, the recess 146 is defined by a through-hole.

The wear indication device has a bar 212 configured to carry or respectively engage the signal wire 220, 220' such that the signal wire projects from the fixation means 210 and in particular the bar 212 towards the friction lining 120, 120'.

In particular, the bar 212 engages the signal wire 220, 220' such that the signal wire is at least partly arranged externally on the fixation means 210 and project therefrom towards the contact surface 121, 121'. The bar 212 engages a loop 222 provided at a distal end of the signal wire 220, 220' proximate to the carrier plane 142.

As shown in Figs. 2 and 3, the fixation means 210 comprises a front part 214 resting at least partly against the carrier plane 142. The bar 212 is extending from the front part 214 parallel to the carrier plane 142 through the loop 222 of the signal wire 220, 220'.

As shown in Fig. 3, the signal wire 220' projects from the externally of the fixation means 210 towards the contact surface 121' of the worn friction lining 120'. Due to the rotation of the brake disk during braking (not shown), the thickness of the friction lining 120' in Fig. 3 is decreased such that the distance of the contact surface 121' to the carrier plane 142 is decreased accordingly. Due to this reason, the signal wire 220' projecting from the externally of the fixation means 210 meets the brake disk (not shown). Once the wire 220' is ruptured by the rotation of the brake disk during braking, a voltage change is registered as a function of the rupture, indicating that the wear limit of the friction lining 120' is reached. Only a residual amount of friction lining 120' remains such that the vehicle can safely be taken to a maintenance station for brake pad replacement.

Fig. 4 shows a perspective view of a part of the brake caliper 10 from the wear side of the brake pad 100.

The brake pad carrier 140 has a rear plane 144 opposite to the carrier plane (see Figs. 2 and 3). The fixation means 210 of the wear indication device 200 has a back part 216, which rests against the rear plane 144 of the brake pad carrier 140.

Further, the fixation means 210 has a recess 218 arranged at the back part 216 which provides a passage for the signal wire 220 and in particular a back end 224 of the signal wire 220.

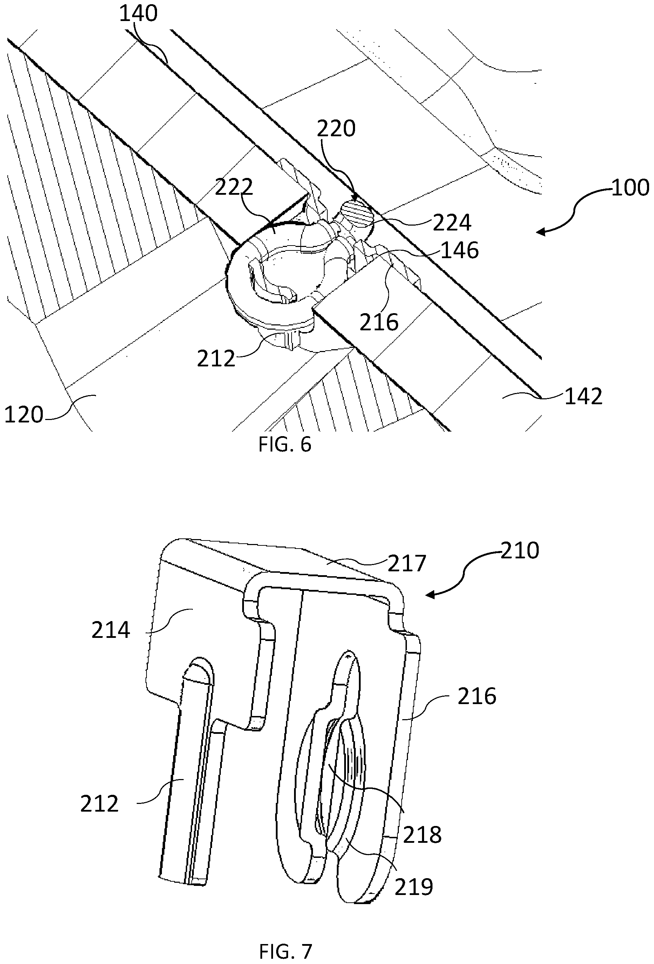

Figs. 5 and 6 illustrate the brake caliper 10 and in particular the brake pad 100 in a sectional view.

As in particular shown in Fig. 5, the fixation means 210 is configured to apply a clamping force to the carrier plane 142 and the rear plane 144 to couple the wear indication device 200 to the brake pad carrier 140. In order to apply a clamping force, the fixation means 210 has the front part 214 and the back part 216, both at least partly defined by a flat plate. The front part 214 rests at least partly at the carrier plane 142, the back part 216 rests at least partly at the rear plane 144 and the fixation means further has a bridge 217 connecting the front part 214 and the back part 216 (see also Fig. 7).

The bridge 217 rests against an upper surface 148 of the brake pad carrier 140 such that the fixation means 210 can be coupled to the brake pad carrier 140 by pushing from the upper surface 148 along the carrier plane 142 and the rear plane 144.

As can be seen in Figs. 5 to 7, the fixation means 210 further has the recess 218 configured to guide the signal wire 220 and which at least partly overlaps the through-hole146.

The back end 224 of the signal wire 220 exits the through-hole 146 and extends through the recess 218. Thus, the signal wire 220 is guided through the recess 218 accordingly.

Furthermore, the fixation means 210 has a positioning means 219 configured to engage a circumferential surface of the through-hole 146 thereby arranging the fixation means 210, in particular the bar 212, at a predefined position with respect to the through-hole 146. The positioning means 219 is defined by a shoulder in the back part 216 extending at least partly into the through-hole 146, wherein the shoulder has an outer counter that corresponds to the inner circumference of the through-hole 146.

Fig. 7 illustrates a perspective view of the fixation means 210 of the wear indication device 200. The front part 214 and the back part 216 both extend parallel to each other. The bar 212 extends from the front part 214 parallel to the back part 216. The bridge 217 is arranged rectangular to the front part 214 and the back part 216.

In another preferred embodiment, not shown, there can also be an angle defined between the front part 214 and the bridge 217 and/or between the back part 216 and the bridge 217 that is less than 90 ° in order to increase the clamping force applied by the fixation means 210.

### List of reference signs (part of the description)

- 1: disk brake
- 10: brake caliper
- 100: brake pad
- 120: friction lining
- 121: contact surface
- 122: cut-out
- 140: brake pad carrier
- 142: carrier plane
- 144: rear plane
- 146: recess, brake pad carrier
- 148: upper surface
- 200: wear indication device
- 210: fixation means
- 212: bar
- 214: front part
- 216: back part
- 217: bridge
- 218: recess, wear indication device
- 219: positioning means
- 220: signal wire
- 221: connector
- 222: looped portion
- 224: back end portion
- 300: spring hanger
- 320: hanger coupling means
- 340: hanger seat

## Claims

1. Brake caliper (10) for a vehicle brake (1), in particular for a disc brake of a commercial vehicle, the brake caliper (10) comprising:
- a brake pad (100) having a friction lining (120) and a brake pad carrier (140) configured to carry the friction lining (120) proximate to a brake disc of the vehicle brake (1),
wherein the friction lining (120) has a contact surface (121) facing away from the brake pad carrier (140) which is configured to bear against the brake disc of the vehicle brake (1) during braking, and
- a wear indication device (200) having a fixation means (210) and a signal wire (220),
wherein the fixation means (210) is configured to engage the brake pad carrier (140) such that the wear indication device (200) projects from the brake pad carrier (140) towards the contact surface (121),
wherein the signal wire (220) is at least partly arranged externally on the wear indication device (200) and projects therefrom towards the contact surface (121) wherein the brake pad carrier (140) has a carrier plane (142) facing towards the friction lining (120) and a rear plane (144) opposite to the carrier plane (142), and wherein the fixation means (210) is configured to engage the carrier plane (142) and the rear plane (144) such as to clamp the wear indication device (200) to the brake pad carrier (140) and wherein the fixation means (210) has a front part (214) engaging the carrier plane (142), a back part (216) engaging the rear plane (144) and a bridge (217) connecting the front part (214) and the back part (216), wherein preferably, the bridge (217) is configured to rest against an upper surface (148) of the brake pad carrier (140) and wherein the brake pad carrier (140) has a recess, preferably a through-hole (146), extending from the carrier plane (142) to the rear plane (144), and wherein the signal wire (220) is led therethrough,
**characterizing in that** the fixation means (210) has a recess (218) configured to guide the signal wire (220), wherein the recess (218) at least partly overlaps the recess (146) of the brake pad carrier, and a back end portion (224) of the signal wire (220) is led through both recesses (146, 218), wherein the fixation means (210) has a positioning means (219) configured to engage a circumferential surface of the through-hole (146) thereby arranging the fixation means (210) at a predefined position with respect to the through-hole (146), and e **in that** the trough hole (146) is configurated to guide the signal wire (220) in the brake pad carrier (140) and the recess (218) is configurated to guide the signal wire (220) in the fixation means (210).

2. Brake caliper (10) according to claim 1,
wherein the fixation means (210) comprises a bar (212) extending from the front part (214) parallel to the carrier plane (142) and wherein the bar (212) is configured to engage the signal wire (220) proximate to the carrier plane (142).

3. Brake caliper (10) according to claim 2,
wherein the signal wire (220) is at least partially looped around the bar (212) such that a looped portion (222) of the signal wire (200) projects from the bar (212) towards the contact surface (121).

4. Brake caliper (10) according to any one of the proceeding claims,
wherein the fixation means (210), preferably the bar (212), is configured to releasably engage the signal wire (220), preferably the looped portion (222), proximate to the carrier plane (142).

5. Wear indication device (200) for a brake caliper (10) according to any one of the proceeding claims, the wear indication device (200) having a fixation means (210) and a signal wire (220) according to any one of the preceding claims.

6. Vehicle brake (1), in particular disc brake of a commercial vehicle, the vehicle brake (1) comprising:
- a brake disc, and
- a brake caliper (10) according to any one of the claims 1 to 4, and
- a wear indication device (200) according to claim 5.

## Patentansprüche

1. Bremssattel (10) für eine Fahrzeugbremse (1), insbesondere für eine Scheibenbremse eines Nutzfahrzeugs, der Bremssattel (10) umfassend:
- einen Bremsbelag (100) mit einem Reibbelag (120) und einem Bremsbelagträger (140), der konfiguriert ist, um den Reibbelag (120) in der Nähe einer Bremsscheibe der Fahrzeugbremse (1) zu tragen,
wobei der Reibbelag (120) eine von dem Bremsbelagträger (140) abgewandte Kontaktfläche (121) aufweist, die konfiguriert ist, um beim Bremsen an der Bremsscheibe der Fahrzeugbremse (1) anzuliegen, und
- eine Verschleißangabevorrichtung (200) mit einem Befestigungsmittel (210) und einem Signaldraht (220),
wobei das Befestigungsmittel (210) konfiguriert ist, um mit dem Bremsbelagträger (140) in Eingriff zu kommen, so dass die Verschleißangabevorrichtung (200) von dem Bremsbelagträger (140) in Richtung der Kontaktfläche (121) vorsteht,
wobei der Signaldraht (220) mindestens teilweise außen an der Verschleißangabevorrichtung (200) angeordnet ist und von dieser in Richtung der Kontaktfläche (121) vorsteht, wobei der Bremsbelagträger (140) eine dem Reibbelag (120) zugewandte Trägerebene (142) und eine der Trägerebene (142) gegenüberliegende Hinterebene (144) aufweist, und wobei das Befestigungsmittel (210) konfiguriert ist, um mit der Trägerebene (142) und der hinteren Ebene (144) in Eingriff zu kommen, um die Verschleißangabevorrichtung (200) an dem Bremsbelagträger (140) festzuklemmen, und wobei das Befestigungsmittel (210) einen vorderen Teil (214), der mit der Trägerebene (142) in Eingriff kommt, einen hinteren Teil (216), der mit der hinteren Ebene (144) in Eingriff kommt und einen den vorderen Teil (214) und den hinteren Teil (216) verbindenden Steg (217) aufweist, wobei vorzugsweise der Steg (217) zum Anliegen an einer oberen Fläche (148) des Bremsbelagträgers (140) ausgebildet ist und wobei der Bremsbelagträger (140) eine Ausnehmung aufweist, wobei der Bremsbelagträger (140) eine Ausnehmung, vorzugsweise eine Durchgangsbohrung (146), aufweist, die sich von der Trägerebene (142) zu der hinteren Ebene (144) erstreckt, und wobei der Signaldraht (220) durch diese hindurchgeführt ist,
**dadurch gekennzeichnet, dass** das Befestigungsmittel (210) eine Ausnehmung (218) aufweist, die zum Führen des Signaldrahts (220) konfiguriert ist, wobei die Ausnehmung (218) die Ausnehmung (146) des Bremsbelagträgers mindestens teilweise überlappt, und ein hinterer Endabschnitt (224) des Signaldrahts (220) durch beide Ausnehmungen (146, 218) hindurchgeführt ist, wobei das Befestigungsmittel (210) ein Positionierungsmittel (219) aufweist, das konfiguriert ist, um in eine Umfangsfläche des Durchgangslochs (146) einzugreifen, wodurch das Befestigungsmittel (210) in einer vordefinierten Position in Bezug auf das Durchgangsloch (146) angeordnet wird, und dass das Durchgangsloch (146) konfiguriert ist, um den Signaldraht (220) in dem Bremsbelagträger (140) zu führen, und die Ausnehmung (218) konfiguriert ist, um den Signaldraht (220) in dem Befestigungsmittel (210) zu führen.

2. Bremssattel (10) nach Anspruch 1,
wobei das Befestigungsmittel (210) eine Stange (212) umfasst, die sich von dem vorderen Teil (214) parallel zu der Trägerebene (142) erstreckt, und wobei die Stange (212) konfiguriert ist, um den Signaldraht (220) in der Nähe der Trägerebene (142) in Eingriff zu nehmen.

3. Bremssattel (10) nach Anspruch 2,
wobei der Signaldraht (220) mindestens teilweise um die Stange (212) geschlungen ist, so dass ein geschlungener Abschnitt (222) des Signaldrahtes (200) von der Stange (212) in Richtung der Kontaktfläche (121) vorsteht.

4. Bremssattel (10) nach einem der vorstehenden Ansprüche,
wobei das Befestigungsmittel (210), vorzugsweise die Stange (212), konfiguriert ist, um den Signaldraht (220), vorzugsweise den geschlungenen Abschnitt (222), in der Nähe der Trägerebene (142) lösbar in Eingriff zu nehmen.

5. Verschleißangabevorrichtung (200) für einen Bremssattel (10) nach einem der vorstehenden Ansprüche,
wobei die Verschleißangabevorrichtung (200) ein Befestigungsmittel (210) und einen Signaldraht (220) nach einem der vorstehenden Ansprüche aufweist.

6. Fahrzeugbremse (1), insbesondere Scheibenbremse eines Nutzfahrzeugs, die Fahrzeugbremse (1) umfassend:
- eine Bremsscheibe, und
- einen Bremssattel (10) nach einem der Ansprüche 1 bis 4, und
- eine Verschleißangabevorrichtung (200) nach Anspruch 5.

## Revendications

1. Étrier de frein (10) d'un frein de véhicule (1), en particulier d'un frein à disque d'un véhicule utilitaire, l'étrier de frein (10) comprenant :
- une plaquette de frein (100) ayant une garniture de friction (120) et un support de plaquette de frein (140) conçu pour supporter la garniture de friction (120) à proximité d'un disque de frein du frein de véhicule (1),
dans lequel la garniture de friction (120) a une surface de contact (121) tournée à l'opposé du support de plaquette de frein (140) qui est conçue pour venir en appui contre le disque de frein du frein de véhicule (1) pendant le freinage, et
- un dispositif d'indication d'usure (200) ayant un moyen de fixation (210) et un fil de signal (220),
dans lequel le moyen de fixation (210) est conçu pour venir en prise avec le support de plaquette de frein (140) de telle sorte que le dispositif d'indication d'usure (200) fait saillie à partir du support de plaquette de frein (140) vers la surface de contact (121),
dans lequel le fil de signal (220) est au moins agencé partiellement de manière externe sur le dispositif d'indication d'usure (200) et fait saillie à partir de celui-ci en direction de la surface de contact (121) dans lequel le support de plaquette de frein (140) a un plan de support (142) tourné vers la garniture de friction (120) et un plan arrière (144) opposé au plan de support (142), et dans lequel le moyen de fixation (210) est conçu pour venir en prise avec le plan de support (142) et le plan arrière (144) de manière à serrer le dispositif d'indication d'usure (200) au support de plaquette de frein (140) et dans lequel le moyen de fixation (210) a une partie avant (214) venant en prise avec le plan de support (142), une partie arrière (216) venant en prise avec le plan arrière (144) et un pont (217) reliant la partie avant (214) et le plan arrière (216), dans lequel, de préférence, le pont (217) est conçu pour reposer contre une surface supérieure (148) du support de plaquette de frein (140) et dans lequel le support de plaquette de frein (140) a un évidement, de préférence un trou traversant (146) s'étendant du plan de support (142) au plan arrière (144), et dans lequel le fil de signal (220) est conduit à travers celui-ci, **caractérisé en ce que** le moyen de fixation (210) a un évidement (218) conçu pour guide le fil de signal (220), dans lequel l'évidement (218) chevauche au moins partiellement l'évidement (146) du support de plaquette de frein, et une partie d'extrémité arrière (224) du fil de signal (220) est conduit à travers les deux évidements (146, 218) dans lequel le moyen de fixation (210) a un moyen de positionnement (219) conçu pour venir en prise avec une surface circonférentielle du trou traversant (146), agençant ainsi le moyen de fixation (210) au niveau d'une position prédéfinie par rapport au trou traversant (146), et **en ce que** le trou traversant (146) est conçu pour guider le fil de signal (220) dans le support de plaquette de frein (140) et l'évidement (218) est conçu pour guider le fil de signal (220) dans le moyen de fixation (210).

2. Étrier de frein (10) selon la revendication 1,
dans lequel le moyen de fixation (210) comprend une barre (212) s'étendant de la partie avant (214) parallèle au plan de support (142) et dans lequel la barre (212) est conçue pour venir en prise avec le fil de signal (220) à proximité du plan de support (142).

3. Étrier de frein (10) selon la revendication 2,
dans lequel le fil de signal (220) est au moins partiellement bouclé autour de la barre (212) de telle sorte qu'une partie en boucle (222) du fil de signal (200) fait saillie de la barre (212) vers la surface de contact (121).

4. Étrier de frein (10) selon l'une quelconque des revendications précédentes,
dans lequel le moyen de fixation (210), de préférence la barre (212), est conçu pour venir en prise de manière amovible avec le fil de signal (220), de préférence la partie en boucle (222), à proximité du plan de support (142).

5. Dispositif d'indication d'usure (200) pour un étrier de frein (10) selon l'une quelconque des revendications précédentes, le dispositif d'indication d'usure (200) ayant un moyen de fixation (210) et un fil de signal (220) selon l'une quelconque des revendications précédentes.

6. Frein de véhicule (1), en particulier un frein à disque d'un véhicule utilitaire, le frein de véhicule (1) comprenant :
- un disque de frein, et
- un étrier de frein (10) selon l'une des revendications 1 à 4, et
- un dispositif d'indication d'usure (200) selon la revendication 5.
